(19) Europäisches Patentamt
European Patent Office
Office européen des brevets

(11) Veröffentlichungsnummer: **0 496 098 A1**

# (12) EUROPÄISCHE PATENTANMELDUNG

(21) Anmeldenummer: **91122064.8**

(51) Int. Cl.$^5$: **D06M 11/72**

(22) Anmeldetag: **21.12.91**

(30) Priorität: **19.01.91 DE 4101539**

(43) Veröffentlichungstag der Anmeldung: **29.07.92 Patentblatt 92/31**

(84) Benannte Vertragsstaaten: **BE DE FR GB IT**

(71) Anmelder: **Pfersee Chemie GmbH**
**Rehlinger Str. 1 Postfach 1153**
**W-8901 Langweid am Lech(DE)**

(72) Erfinder: **Chrobaczek, Harald, Dr.**
**Oblatterwallstrasse 40**
**W-8900 Augsburg(DE)**
Erfinder: **Angele, Theodor**
**Treustrasse 14**
**W-8900 Augsburg(DE)**

## (54) Zusammensetzung zur Flammfestausrüstung von Fasermaterialien.

(57) Wäßrige Dispersionen, welche Ammoniumpolyphosphat und ein Phosphat einer stickstoffhaltigen organischen Base sowie ggf.weitere Komponenten enthalten, eignen sich für die Flammfestausrüstung von Fasermaterialien. Diese losungsmittelfreie Ausrüstung bewirkt hohe Effektivität bezüglich Flammschutz und vermittelt den Fasermaterialien vollen Griff.

EP 0 496 098 A1

Die Erfindung betrifft eine Dispersion, enthaltend mindestens folgende Komponenten:

a) ein Phosphat einer stickstoffhaltigen organischen Base, welche mindestens ein Kohlenstoffatom enthält, das nur an Stickstoff-und/oder Sauerstoffatome und an mindestens ein basisches Stickstoffatom gebunden ist

b) ein Ammoniumpolyphosphat

c) Wasser.

Sie betrifft ferner die Verwendung solcher Dispersionen zur Behandlung von Fasermaterialien.

Es ist seit langem bekannt, Fasermaterialien, die z.B. in Form von Flächengebilden vorliegen, mit wäßrigen Zusammensetzungen zu behandeln, welche Phosphorverbindungen enthalten, um eine flammhemmende Wirkung auf den Fasermaterialien zu erzielen. So ist beispielsweise in "J. Fire Sci. 6 (1988) 5, 333-347, in der GB-PS 2 202 243, in der US-PS 4 701 373 sowie in der WO 8901-011 die Verwendung von Ammoniumpolyphosphat in flammhemmenden Zusammensetzungen beschrieben. Der Nachteil solcher Zusammensetzungen besteht darin, daß mit wäßrigen Dispersionen solcher Zusammensetzungen ausgerüstete Fasermaterialien einen noch nicht optimalen FLammschutzeffekt besitzen. Es hat sich gezeigt, daß diese Fasermaterialien bei einem Brenntest nach dem Entfernen der Zündflamme für eine relative lange Zeit weiterbrennen.

Auch Phosphate organsicher Basen wurden bereits in flammhemmenden Zusammensetzungen verwendet. Dies ist beispielsweise bekannt aus Kurz-Referaten über JP-A 88-209-249 (JP-B 89-20267) und über JP-63-234087. Der Nachteil solcher Zusammensetzungen besteht darin, daß Fasermaterialien, welche mit wäßrigen Dispersionen dieser Zusammensetzungen ausgerüstet wurden, dazu neigen, nach Entfernung der Zündflamme nachzuglimmen. Einige bekannte Flammschutzmittel werden als Lösungen in organischen Lösungsmitteln eingesetzt (siehe z.B. DE-OS 29 19 294). Demgegenüber bieten Zusammensetzungen Vorteile, welche als wäßrige Dispersionen verwendbar sind.

Der vorliegenden Erfindung lag die Aufgabe zugrunde, eine wäßrige Zusammensetzung zur Flammfestausrüstung insbesondere von Fasermaterialien zur Verfügung zu stellen, welche frei von organischem Lösungsmittel ist, hohe Effektivität als Flammschutzmittel für Fasermaterialien besitzt und den ausgerüsteten Fasermaterialien vollen Griff vermittelt.

Die Aufgabe wurde gelöst durch eine Dispersion gemäß Patentanspruch 1. Zur Herstellung solcher Dispersionen werden mindestens folgende Komponeneten verwendet:

a) ein Phosphat einer stickstoffhaltigen organischen Base, welche mindestens ein Kohlenstoffatom enthält, das nur an Stickstoff- und/oder Sauerstoffatome und an mindestens ein basisches Stickstoffatom gebunden ist.

b) ein Ammoniumpolyphosphat

c) Wasser.

Daneben können weitere Komponenten für die Herstellung erfindungsgemäßer Dispersionen verwendet werden. Eine bevorzugte Ausführungsform der Dispersionen ist beispielsweise dadurch gekenzeichnet, daß zusätzlich ein oder mehrere Dispergatoren (als Komponente g)) bei der Herstellung verwendet wurden. Falls durch geeignete Auswahl von Art und Menge der einzelnen Komponenten a) und b) sowie ggf. weiterer Komponenten und durch ein geeignetes Herstellungsverfahren stabile wäßrige Dispersionen auch ohne Dispergatorzusatz erhalten werden, ist die zusätzliche Verwendung von Dispergatoren nicht unbedingt erforderlich, aber vielfach günstig. Andernfalls müssen einer oder mehrere Dispergatoren eingesetzt werden. Die Herstellung erfindungsgemäßer Dispersionen kann durch Vermischen der Komponenten a) bis c) sowie ggf. weiterer Komponenten nach Methoden erfolgen, die dem Fachmann bekannt sind, der sich mit Dispergierung bzw. Emulgierung beschäftigt. So können beispielsweise die Komponenten a) und b) sowie ggf. weitere Komponenten einzeln in Wasser eingerührt werden oder es können zwei oder mehr dieser Komponenten miteinander vermischt werden, bevor sie mit Wasser vereinigt werden. Das Vermischen der Komponenten a) bis c) sowie ggf. weiterer Komponenten zwecks Herstellung einer Dispersion kann ggf. mit üblichen Dispergiervorrichtungen und ggf. bei erhöhter Temperatur erfolgen.

Die Komponenten a) und b):

Komponente a) ist das Phosphat einer organischen, stickstoffhaltigen Base. Diese Base muß mindestens ein Kohlenstoffatom enthalten, das nur an Stickstoff- und/oder Sauerstoffatome und an mindestens ein basisches Stickstoffatom gebunden ist. Es ist erforderlich, daß an dieses basische Stickstoffatom Wasserstoffkationen gebunden werden können. Besonders geeignete Vertreter solcher organischer Basen sind Guanidin, Harnstoff, Dicyandiamid und Melamin. Das Melamin kann auch Substituenten tragen, z.B. an N gebundene Methylolgruppen ($-CH_2OH$) oder mit $C_1$ bis $C_4$-Alkoholen veretherte Methylolgruppen, z.B. $-CH_2OCH_3$-Gruppen. Mit Ausnahme des Melamins sind die organischen stickstoffhaltigen Basen vorzugsweise frei von aromatischen Gruppierungen.
In den erfindungsgemäßen Dispersionen liegen die genannten organischen Basen als Phosphate vor. Diese Phosphate können Hydrogenorthophosphate, Dihydrogenorthophosphate, tertiäre Orthophosphate, Metaphosphate oder Polyphosphate sein. Sie lassen sich z.B. aus den entsprechenden Basen und Phosphorsäuren erhalten; handelsübliche Produkte der genannten Artkönnen verwendet werden. Als besonders geeignet für die erfindungsgemäßen Dispersionen hat sich das Salz erwiesen ("sekundäres Guanidinphosphat"), das aus Guanidin und Orthophosphorsäure im Molverhältnis 2:1 gebildet wird.
Für die Herstellung erfindungsgemäßer Dispersionen können auch mehrere der genannten Phosphate eingesetzt werden, z.B. ein Gemisch aus einem Phosphat des Guanidins und einem Phosphat des Dicyandiamids.

Komponente b) ist ein Ammoniumpolyphosphat der Formel

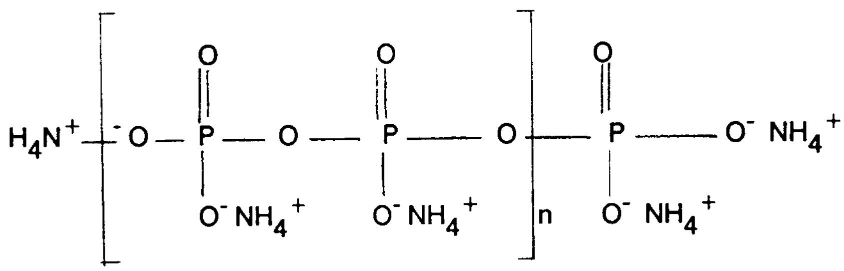

oder ein Polyphosphat dieser Formel, bei dem ein Teil der $NH_4^+$-Ionen durch Wasserstoff ersetzt ist. n besitzt hierbei einen Wert von mindestens 10.

Für hohe Werte von n nähert sich dies der Summenformel $(NH_4PO_3)_n$. In den für die erfindungsgemäßen Zusammensetzungen geeigneten Ammoniumpolyphosphaten besitzt n im Normalfall einen Wert von 500 bis 1000, vorzugsweise von 600 bis 800. Solche Polyphosphate sind handelsübliche Produkte, welche sich beispielsweise durch Neutralisation von Meta- oder Polyphosphorsäure mit Ammoniak erhalten lassen. Die zugrunde liegenden Meta- oder Polyphosphorsäuren müssen in den als Komponente b) verwendbaren Ammoniumpolyphosphaten nicht vollständig, sondern können gegebenenfalls nur teilweise durch Ammoniak neutralisiert sein, d.h. die geeigneten Polyphosphate können noch saure, an Phosphor gebundene, OH-Gruppen enthalten. Mindestens 50% der sauren Wasserstoffatome der zugrunde liegenden Säure sollten jedoch durch $NH_4^+$ ersetzt sein, d.h. der Neutralisationsgrad sollte mindestens 50% betragen. Es hat sich herausgestellt, daß Ammoniumpolyphosphat, das nur wenig löslich in Wasser ist, d.h. von dem sich nicht mehr als etwa 20 g in 1 l Wasser lösen, besonders geeignet ist.

Es hat sich als vorteilhaft erwiesen, wenn die erfindungsgemäßen Dispersionen noch eine weitere Komponente d) enthalten. Durch diese nach folgend beschriebene Komponente d) laßt sich der Griff von mit erfindungsgemäßen Dispersionen ausgerüsteten Fasermaterialien noch weiter verbessern.
Komponente d) ist entweder ein Chlorparaffin oder ein Copolymeres auf Basis von Vinylchlorid und einem Olefin. Es können auch Gemische aus Chlorparaffin und einem solchen Copolymeren verwendet werden. Unter Chlorparaffinen werden lineare oder verzweigte Alkane verstanden, bei denen ein Teil der Wasserstoffatome durch Chlor substituiert ist. Besonders geeignete Chlorparaffine sind solche, welche durchschnittlich 18 bis 20 Kohlenstoffatome und einen Chlorgehalt von 45 - 55 Gew.% aufweisen. Die Aussage "durchschnittlich 18 bis 20 Kohlenstoffatome" bedeutet, daß auch Gemische von Chlorparaffinen mit unterschiedlicher Anzahl von C-Atomen verwendet werden können.
Was das Copolymere aus Vinylchlorid und einem Olefin betrifft, so kann das Molgewicht bzw. der Polymerisationsgrad des Copolymeren im normalen Bereich liegen, und es können handelsübliche Produkte verwendet werden. Der bevorzugte Bereich für die Viskosität des Copolymeren liegt bei 1000 bis 2000 mPa.s bei 20 °C. Als Olefine, die zusammen mit Vinylchlorid die Basis für geeignete Copolymere bilden können, sind insbesondere nicht-cyclische Olefine mit 2 bis 6 C-Atomen, vorzugsweise mit einer, ggf. aber auch mit mehreren C-C-Doppelbindungen, zu nennen. Diese $C_2$-$C_6$-Olefine können eine lineare oder verzweigte Kohlenstoffkette aufweisen. Besonders gute Effekte werden mit einem Copolymeren aus Vinylchlorid und Ethylen erhalten, das eine Viskosität von etwa 1500 mPa.s bei 20 °C und einen Chlorgehalt von 10 bis 25 Gew.% aufweist. Als Copolymere auf Basis von Vinylchlorid und Olefin werden bevorzugt Copolymere verwendet, welche nur aus diesen beiden Monomeren aufgebaut sind. Gegebenenfalls können jedoch auch noch andere Monomereinheiten in kleineren Mengen enthalten sein, z.B. Acrylsäure oder deren

Ester.

Für den Fall, daß die erfindungsgemäßen Dispersionen eine Komponente d) (Chlorparaffin und/oder Copolymeres auf Basis von Vinylchlorid und Olefin) enthalten, kann es vorteilhaft sein, eine weitere Komponente e) hinzuzufügen. Hierdurch kann in vielen Fällen eine weitere Steigerung der flammhemmenden Wirkung erreicht werden. Komponente e) ist vorzugsweise Antimontrioxid ($Sb_2O_3$), das in handelsüblicher Qualität, z.B. in pulvriger Form, eingesetzt werden kann. Vielfach empfiehlt es sich, das $Sb_2O_3$ in Form eines Sols einzusetzen; es ist nämlich bekannt, daß $Sb_2O_3$-Sol bezüglich Flammschutz bessere Ergebnisse liefern kann als $Sb_2O_3$ in Form größerer Teilchen. Solche Sole sind nach bekannten Methoden herstellbar bzw. auf dem Markt erhältlich. An Stelle des als Komponente e) bevorzugten Antimontrioxids können als Komponente e) auch andere Metalloxide eingesetzt werden, vor allem solche, wie sie in Anspruch 1 der DE-C2 23 52 923 genannt sind.

Für den Fall, daß an Stelle von $Sb_2O_3$ ein anderes Metalloxid als Komponente e) eingesetzt wird, sind die für Komponente e) in den Ansprüchen und in der Beschreibung genannten Mengenangaben so zu ändern, daß die Menge an (statt Sb verwendetem) anderem Metall ebenso groß ist wie die Menge an Sb im Fall der Verwendung von $Sb_2O_3$ als Komponente e).

Mit den erfindungsgemäßen Dispersionen, insbesondere deren oben beschriebenen bevorzugten Ausführungsformen lassen sich hervorragende Eigenschaften der damit ausgerüsteten Fasermaterialien erzielen, was flammhemmende Wirkung, deren Beständigkeit gegen Witterungs- und Feuchtigkeitseinflüsse und vollen Griff betrifft. Die Dispersionen sind daher sehr gut für die Ausrüstung von Flächengebilden aus Fasermaterialien wie Geweben geeignet, welche der Witterung ausgesetzt werden. Dazu gehören unter anderem LKW-Planen und Segelgewebe. Bezüglich einiger Eigenschaften kann gegebenenfalls noch eine weitere Verbesserung erzielt werden, wenn bei der Herstellung der Dispersionen noch ein oder mehrere zusätzliche Produkte verwendet werden. Bevorzugte Ausführungsformen der erfindungsgemäßen Dispersionen bestehen deshalb darin, daß sie zusätzlich zu den genannten Komponenten a) bis e) noch eine oder mehrere der nachfolgend aufgeführten Komponenten f) bis i) enthalten:

f) Zinkchlorid ($ZnCl_2$)
g) einen oder mehrere Dispergatoren
h) ein Fungizid
i) ein Oligo- oder Polyurethan, dessen aus der Diolkomponente stammende Einheiten Perfluoralkylreste als Substituenten enthalten.

Als Komponente f) kann handelsübliches Zinkchlorid ($ZnCl_2$) verwendet werden. Durch $ZnCl_2$-Zusatz kann eine weitere Verbesserung der flammhemmenden Wirkung erreicht werden, vor allem, wenn die Dispersionen Chlorparaffin und Antimontrioxid enthalten.

Ein Fungizid (Komponente h)) zuzusetzen empfiehlt sich vor allem, wenn Flächengebilde aus Fasermaterialien ausgerüstet werden sollen, bei deren Verwendung mit Pilzbefall gerechnet werden muß; ein Beispiel hierfür sind Bootabdeckplanen. Geeignete Fungizide sind dem Fachmann aus dem Stand der Technik bekannt und auf dem Markt erhältlich. Beispiele für geeignete Produkte sind
®FUNGITEX-Typen der Firma Chemische Fabrik Pfersee GmbH, DE.

Durch Zusatz einer Komponente i) zu den erfindungsgemäßen Dispersionen läßt sich zusätzlich eine ölabweisende Wirkung und eine Erhöhung der wasserabweisenden Wirkung auf den ausgerüsteten Fasermaterialien erzielen. Komponente i) ist ein Oligo- oder Polyurethan, dessen aus der Diolkomponente stammende Einheiten Perfluoralkylreste als Substituenten aufweisen. Geeignete Vertreter solcher Produkte und ihre Herstellung sind in der EP-A 0 348 350 beschrieben.

Die oben für den besonders bevorzugten Fall von Perfluoralkylreste enthaltenden Oligo- oder Polyurethanen gemachte Aussage, daß hierdurch ölabweisende Wirkung und Erhöhung der wasserabweisenden Wirkung auf den entsprechend ausgerüsteten Fasermaterialien erzielt werden können, gilt auch für andere in der EP-A 0 348 350 beschriebene Produkte. So ist es z.B. auch möglich, Perfluoralkylgruppen enthaltende Polyester den erfindungsgemäßen Dispersionen zur Erzielung der genannten Effekte zuzusetzen. Es können an Stelle der beschriebenen Polyurethane auch Perfluoralkylgruppen enthaltende Copolymere mit Urethan- und Siloxaneinheiten zugesetzt werden, wie sie z.B. in der EP-A 0 325 918 oder in der deutschen Patentanmeldung P 40 22 443.0 (Anmeldetag: 14.07.1990) beschrieben sind. Andere fluorhaltige Reste enthaltende Produkte, z.B. Copolymere, welche Acrylverbindungen als Monomerbausteine enthalten, sind in der US-PS 4 742 140 beschrieben. Auch solche Produkte können zur Erzielung bzw. Steigerung der öl- und wasserabweisenden Wirkung den erfindungsgemäßen Dispersionen beigefügt werden.

Falls es erwünscht oder erforderlich ist, bei der Herstellung erfindungsgemäßer Dispersionen einen oder mehrere Dispergatoren (Komponente g) mitzuverwenden, so können hierfür handelsübliche, dem Fachmann bekannte Produkte eingesetzt werden. Gut geeignet sind z.B. Ethoxilierungsprodukte von Fettaminen, ggf. in quaternisierter Form.

Die Mengenverhältnisse der Komponenten a) bis i), die zur Herstellung der erfindungsgemäßen Dispersionen eingesetzt werden, können in weiten Bereichen variiert werden, natürlich unter der Einschränkung, daß stabile wäßrige Dispersionen erhalten werden müssen, wofür gegebenenfalls die Anwesenheit einer Komponente g) (Dispergator oder Dispergatorgemisch) erforderlich ist. Eine bevorzugte Ausführungsform erfindungsgemäßer Dispersionen besteht darin, daß sie die Komponenten c) bis i) in folgenden Gewichtsverhältnissen enthält, wobei sich die nachfolgend genannten Werte jeweils auf wasserfreie Produkte beziehen, ausgenommen für Komponente c):

| | |
|---|---|
| Komponente c): | 30 bis 70, insbesondere 30 bis 50 Gew.teile |
| Komponente d): | 0 bis 40, insbesondere 20 bis 35 Gew.teile |
| Komponente e): | 0 bis 20, insbesondere 12 bis 16 Gew.teile |
| Komponente f): | 0 bis 5, insbesondere 0,6 bis 5 Gew.teile |
| Komponente g): | 0 bis 5, insbesondere 1 bis 5 Gew.teile |
| Komponente h): | 0 bis 5, insbesondere 2 bis 5 Gew.teile |
| Komponente i): | 0 bis 2, insbesondere 0,4 bis 0,8 Gew.teile |

und daß sie die Komponenten a) und b) in Mengen von je 0,3 bis 5, insbesondere 0,5 bis 2 Gewichtsteilen für den Fall enthält, daß sie mindestens 15 Gew.teile an Komponente d) und mindestens 10 Gew.teile an Komponente e) enthält und daß sie die Komponenten a) und b) jeweils in Mengen von 10 bis 20 Gewichtsteilen enthalt für den Fall, daß sie weniger als 15 Gew.teile an Komponente d) oder weniger als 10 Gew.teile an Komponente e) enthält.

Die Summe der im Einzelfall verwendeten Zahlenwerte für die Gewichtstelle an Komponenten a) bis c) sowie ggf. an Komponenten d) bis i) muß (anders als im Fall der Angabe von Gew.%) nicht 100 Gew.teile betragen.

Wie aus den vorstehenden bevorzugten Mengenangaben ersichtlich, werden die Mengen an Komponenten a) und b) vorzugsweise dann niedriger gehalten, wenn größere Mengen der Komponenten d) und e) (die ihrerseits die flammhemmende Wirkung erhöhen) anwesend sind.

Neben den genannten Komponenten können bei der Herstellung erfindungsgemäßer Dispersionen noch Aluminiumhydroxid und/oder Magnesiumhydroxid zusätzlich verwendet werden. Diese beiden Hydroxide können auch einen Teil, z.B. bis zu 50 Gew.%, des gewünschten Anteils an $Sb_2O_3$ (Komponente e) ersetzen. Falls hiervon Gebrauch gemacht wird, verwendet man zweckmäßigerweise solche Mengen von Aluminium- und/oder Magnesiumhydroxid, daß die Summe der Mengen an Al und Mg, jeweils als elementares Metall berechnet, das gleiche Gewicht besitzt wie das Gewicht des Antimons (ebenfalls als Element berechnet) in dem Anteil $Sb_2O_3$, der durch Al- bzw. Mg-Verbindung ersetzt wird. Durch den Zusatz von Al- und/oder Mg-Hydroxid können die Kosten der Zusammensetzungen niedriger gehalten werden. Bevorzugt werden zwar bei der Herstellung erfindungsgemäßer Dispersionen Aluminiumhydroxid und/oder Magnesiumhydroxid verwendet, falls überhaupt Al- und/oder Mg-Verbindungen in den Dispersionen erwünscht sind. In den Dispersionen selbst müssen die Al- bzw. Mg-Verbindungen nicht unbedingt als Hydroxide vorliegen. Vielmehr können sie, bedingt durch die gleichzeitige Verwendung saurer Verbindungen, auch teilweise oder vollständig als Phosphatsalze vorliegen. Diese bilden sich bei der teilweisen oder vollständigen Neutralisation von Al- bzw. Mg-Hydroxid mit einer Phosphorsäure. Als Phosphorsäure kommen in diesem Zusammenhang in Betracht Orthophosphorsäure, Metaphosphorsäure, Pyro- bzw. Polyphosphorsäure oder ein Ammoniumpolyphosphat, das noch saure OH-Gruppen enthält, wie es oben für Komponente b) beschrieben wurde. Gegebenenfalls können auch bei der Herstellung der erfindungsgemäßen Dispersionen direkt diese Phosphatsalze an Stelle von Al- bzw. Mg-Hydroxid verwendet werden. Die hierbei eingesetzten Mengen werden vorzugsweise so bemessen, daß die gleichen Mengen an Al bzw Mg in den Dispersionen enthalten sind wie im Fall der Verwendung von Al-Hydroxid bzw. Mg-Hydroxid.

Wie bereits erwähnt, eignen sich die erfindungsgemäßen Dispersionen ausgezeichnet für die Behandlung von Fasermaterialien, wobei flammhemmende Wirkung und voller Griff erzielt werden. Besonders geeignet sind diese Dispersionen zur Ausrüstung von Flächengebilden aus Fasermaterialien, die aus Cellulosefasern oder aus einem Gemisch aus Cellulose- und Polyesterfasern bestehen.
Das Aufbringen einer erfindungsgemäßen Dispersion, ggf. nach Verdünnung mit Wasser und ggf. nach einem Zusatz weiterer, üblicherweise für die Ausrüstung von Fasermaterialien verwendeter Produkte, auf diese Flächengebilde kann nach bekannten Methoden geschehen, z.B. mittels Foulardierung.

Die Erfindung wird nunmehr durch Ausführungsbeispiele veranschaulicht.

Beispiel 1

Mit den nachfolgend beschriebenen wäßrigen Dispersionen (Flotten 1 bis 5) wurden Gewebe aus reiner Baumwolle und Gewebe aus Polyester/Baumwoll-Mischungen über einen Foulardprozeß ausgerüstet. Die

Flottenaufnahme betrug in allen Fällen (nach dem Abquetschen) ca. 70% des Gewebegewichts. Nach dem Foulardieren wurden die ausgerüsteten Gewebeproben bei 130°C 10 Minuten lang getrocknet und anschließend 24 Stunden bei Raumtemperatur und ca. 65% relativer Feuchte klimatisiert. Vor Durchführung der Tests bezüglich Brennverhalten wurde ein Teil der Gewebeproben 24 Stunden lang in umgewälztem und 3 mal/Stunde erneuertem Leitungswasser gelagert und anschließend luftgetrocknet. Diese "Wasserung" sollte den Einfluß von Witterungsbedingungen simulieren. Bei dem Brenntest, der nach DIN 54336 durchgeführt wurde, wurde die Beflammzeit (BFZ) variiert; gemessen wurden Brennzeit (BZ) und Glimmzeit (GZ). Die Beflammzeit wird in Sekunden angegeben und ist diejenige Zeit, während welcher die Gewebeprobe der Zündflamme ausgesetzt wird. Die Brennzeit ist diejenige Zeit in Sekunden, während welcher die Gewebeprobe nach dem Entfernen der Zündflamme weiter brennt. Die Glimmzeit ist diejenige Zeit in Sekunden, während welcher die Gewebeprobe nach Erlöschen der Flamme nach glimmt. Die nach folgenden Angaben für die Flottenzusammensetzungen beziehen sich jeweils auf die Menge an wasserfreien Produkten.

Flotte 1 (erfindungsgemäß)

Diese Flotte war eine wäßrige Dispersion folgender Zusammensetzung:

| | |
|---|---|
| 690 g | Wasser |
| 150 g | weitgehend in Wasser unlösliches Ammoniumpolyphosphat |
| 150 g | sekundäres Guanidinphosphat |
| 10 g | ethoxilierter Isotridecylalkohol (durchschnittlich 8 EO-Einheiten) als Emulgator |

Flotte 2 (erfindungsgemäß)

| | |
|---|---|
| 412 g | Wasser |
| 10 g | weitgehend in Wasser unlösliches Ammoniumpolyphosphat |
| 10 g | sekundäres Guanidinphosphat |
| 145 g | Antimontrioxid ($Sb_2O_3$) |
| 250 g | eines Vinylchlorid/Ethylen-Copolymeren mit ca. 40 Gew.% Chlor |
| 80 g | eines Chlorparaffins (teilchloriertes $C_{18}$-$C_{20}$-Alkan mit ca. 50 Gew.% Chlor) |
| 1 g | eines Fungizids auf Basis Benzimidazol |
| 29 g | eines Fungizids auf Basis Diphenylmethan, dessen Phenylgruppen Chlor und Hydroxylgruppen als Substituenten aufweisen |
| 7,5 g | eines ethoxilierten (durchschnittlich 8 EO pro Molekül) Fettamins mit durchschnittlich 16 C-Atomen |
| 50 g | 1,2-Propylenglykol |
| 4 g | eines Copolymeren mit Urethan- und Siloxaneinheiten mit Perfluoralkylgruppen enthaltenden Substituenten |
| 1 g | eines neutralen Polysaccharids |

Flotte 3 (Vergleich, nicht erfindungsgemäß)

| | |
|---|---|
| 690 g | Wasser |
| 300 g | Ammoniumpolyphosphat |
| 10 g | ethoxilierter Alkohol (wie in Flotte 1) |

Flotte 4 Vergleich, nicht erfindungsgemäß)

Zusammensetzung wie Flotte 2 mit folgenden Abweichungen:

| | |
|---|---|
| 387 g<br>45 g | Wasser (statt 412 g)<br>sekundäres Guanidinphosphat (statt 10 g) |
| Kein Ammoniumpolyphosphat enthalten. | |

Flotte 5 Vergleich, nicht erfindungsgemäß)

| | |
|---|---|
| 413 g | Wasser |
| 255 g | Vinylchlorid/Ethylen-Copolymer (siehe Flotte 2) |
| 80 g | Chlorparaffin (teilchloriertes $C_{18}$-$C_{20}$ Alkan mit ca. 40 Gew.% Chlor) |
| 1 g | Fungizid auf Basis Benzimidazol |
| 29 g | Fungizid auf Basis substituiertes Diphenylmethan (siehe Flotte 2) |
| 7,5 g | ethoxiliertes Fettamin (siehe Flotte 2) |
| 50 g | 1.2-Propylenglykol |
| 0,6 g | neutrales Polysaccharid |
| 4 g | eines Perfluoralkylgruppen enthaltenden Copolymeren ® SCOTCHGARD FC 251), (3M-Company) |
| 145 g | $Sb_2O_3$ |
| 15 g | Ammoniumpolyphosphat |
| Die Flotte 5 enthielt kein Phosphat einer organischen Base. | |

Die Ergebnisse der Brenntests an mit den Flotten 1 bis 5 ausgerüsteten Gewebeproben zeigt Tabelle 1. In dieser Tabelle bedeutet CO reines Baumwollgewebe und PES/CO ein Mischgewebe aus Polyester und Baumwolle. Die Angabe "brennt" in Tabelle 1 bedeutet, daß nach Entfernen der Zündflamme die Probe weiterbrannte (kein Erlöschen der Flamme), bis die gesamte Probe verbrannt war. In diesem Fall kann natürlich kein Wert für die Glimmzeit (GZ) angegeben werden.

Tabelle 1

| | | Flotte 1 | | Flotte 2 | | Flotte 3 | | Flotte 4 | | Flotte 5 | |
|---|---|---|---|---|---|---|---|---|---|---|---|
| | | CO | PES/CO 65:35 | CO | PES/CO 50:50 | CO | PES/CO 65:35 | CO | PES/CO 50:50 | CO | PES/CO 50:50 |
| BFZ = 3 sec, Gewebe ohne Wässerung | BZ (sec) | - | 0 | 2;1 +) | 2;3 | -- ++) | brennt | 1;0 | 0;0 | 5;5 | 9;10 |
| | GZ (sec) | - | 0 | 0;0 | 0;0 | - | | 0;0 | 0;0 | 10;12 | 15;14 |
| BFZ = 3 sec Gewebe nach 24 h Wässerung | BZ | - | - | 1;1 | 2;2 | - | - | - | 1;1 | 5;6 | 10;9 |
| | GZ | - | - | 0;0 | 0;0 | - | - | - | 0;0 | 8;11 | 15;14 |
| BFZ = 15 sec Gewebe ohne Wässerung | BZ | - | 0 | 0;0 | 0;1 | - | brennt | 0;0 | brennt | 0;0 | 0;0 |
| | GZ | - | 0 | 16;17 | 10;10 | - | | 5;4 | | 23;23 | 13;13 |
| BFZ = 15 sec Gewebe nach 24 h Wässerung | BZ | - | - | 0;0 | 0;0 | - | - | 0;0 | 0;0 | 0;0 | 0;0 |
| | GZ | - | - | 33;35 | 17;18 | - | - | 61;70 | 33;39 | 30;32 | 15;19 |

+) Dort wo zwei Werte für BZ und GZ angegeben sind, handelt es sich um eine Doppelbestimmung.
++) Ein "-" in dieser Tabelle 1 bedeutet, daß die betreffenden Werte nicht gemessen wurden.

Beispiel 2

In einer weiteren Versuchsserie mit Zusatz unterschiedlicher Mengen an $ZnCl_2$ wurden Brenntests an Gewebeproben durchgeführt, welche mit den nachstehend beschriebenen Flotten ausgerüstet worden

waren. Die Ausrüstungs- und Testbedingungen waren die gleichen wie in Beispiel 1.

Flotte 6 (erfindungsgemäß)

Zusammensetzung wie Flotte 2, jedoch mit folgenden Änderungen:

| | |
|---|---|
| 225 g | Vinylchlorid/Ethylen-Copolymer (statt 250 g) |
| 427 g | Wasser (statt 412 g) |
| 2 g | neutrales Polysaccharid (statt 1 g) |
| 3 g | eines Polyurethans mit Perfluoralkylgruppen enthaltenden Substituenten (statt 4 g eines Siloxaneinheiten enthaltenden Copolymeren) |
| 10 g | Zinkchlorid (Flotte 2 ist frei von $ZnCl_2$) |

Flotte 7 (erfindungsgemäß)

wie Flotte 6, aber mit 417 g Wasser und mit 20 g $ZnCl_2$

Flotte 8 (erfindungsgemäß)

wie Flotte 6, aber mit 407 g Wasser und mit 30 g $ZnCl_2$.

Die Ergebnisse der Brenntests zeigt Tabelle 2.

Tabelle 2:

| | | Flotte 6 | | Flotte 7 | | Flotte 8 | | | |
|---|---|---|---|---|---|---|---|---|---|
| | | CO | PES/CO 50:50 | CO | PES/CO 50:50 | CO | PES/CO | | |
| BFZ = 3 sec, Gewebe ohne Wässerung | BZ (sec) | 0 | 1 | 0 | 0 | 0 | 0 | | |
| | GZ (sec) | 0 | 0 | 0 | 0 | 9 | 9 | | |
| BFZ = 3 sec Gewebe nach 24 h Wässerung | BZ | 3 | 3 | 0 | 0 | 3 | 3 | | |
| | GZ | 0 | 0 | 0 | 0 | 0 | 0 | | |
| BFZ = 15 sec Gewebe ohne Wässerung | BZ | 0 | 0 | 7 | 7 | 21 | 21 | | |
| | GZ | 10 | 16 | 57 | 57 | 69 | 69 | | |
| BFZ = 15 sec Gewebe nach 24 h Wässerung | BZ | 0 | 0 | 0 | 0 | 0 | 0 | | |
| | GZ | 10 | 33 | 14 | 22 | 21 | 21 | | |

## Patentansprüche

**1.** Dispersion, enthaltend mindestens folgende Komponenten

a) ein Phosphat einer stickstoffhaltigen organischen Base, welche mindestens ein Kohlenstoffatom

enthält, das nur an Stickstoff- und/oder Sauerstoffatome und an mindestens ein basisches Stickstoffatom gebunden ist.
b) ein Ammoniumpolyphosphat
c) Wasser.

**2.** Dispersion nach Patentanspruch 1, dadurch gekennzeichnet, daß Komponente a) ein Phosphat des Guanidins, Harnstoffs, Dicyandiamids und/oder eines, ggf. substituierten, Melamins ist.

**3.** Dispersion nach Patentanspruch 1 oder 2, dadurch gekennzeichnet, daß sie als Komponente d) zusätzlich ein Chlorparaffin und/oder ein Copolymeres auf Basis von Vinylchlorid und einem Olefin enthält.

**4.** Dispersion nach Patentanspruch 3, dadurch gekennzeichnet, daß sie zusätzlich als Komponente e) Antimontrioxid ($Sb_2O_3$) enthält.

**5.** Dispersion nach einem oder mehreren der Patentansprüche 1 bis 4, dadurch gekennzeichnet, daß sie zusätzlich als Komponente f) $ZnCl_2$ enthält.

**6.** Dispersion nach einem oder mehreren der Patentansprüche 1 bis 5, dadurch gekennzeichnet, daß sie zusätzlich als Komponente g) einen oder mehrere Dispergatoren enthält.

**7.** Dispersion nach einem oder mehreren der Patentansprüche 1 bis 6, dadurch gekennzeichnet, daß sie zusätzlich eine oder mehrere der folgenden Komponenten enthält
h) ein Fungizid
i) ein Oligo- oder Polyurethan, dessen aus der Diolkomponente stammende Einheiten Perfluoralkylreste als Substituenten enthalten.

**8.** Dispersion nach einem oder mehreren der Patentansprüche 1 bis 7, dadurch gekennzeichnet, daß sie die Komponenten c) bis i) in folgenden Gewichtsverhältnissen enthält, wobei sich die nachfolgend genannten Werte jeweils auf wasserfreie Produkte beziehen, ausgenommen für Komponente c):

| | |
|---|---|
| Komponente c): | 30 bis 70, insbesondere 30 bis 50 Gew.teile |
| Komponente d): | 0 bis 40, insbesondere 20 bis 35 Gew.teile |
| Komponente e): | 0 bis 20, insbesondere 12 bis 16 Gew.teile |
| Komponente f): | 0 bis 5, insbesondere 0,6 bis 5 Gew.teile |
| Komponente g): | 0 bis 5, insbesondere 1 bis 5 Gew.teile |
| Komponente h): | 0 bis 5, insbesondere 2 bis 5 Gew.teile |
| Komponente i): | 0 bis 2, insbesondere 0,4 bis 0,8 Gew.teile |

und daß sie die Komponenten a) und b) in Mengen von je 0,3 bis 5, insbesondere 0,5 bis 2 Gewichtsteilen für den Fallenthält, daß sie mindestens 15 Gew.teile an Komponente d) und mindestens 10 Gew.teile an Komponente e) enthält und daß sie die Komponenten a) und b) jeweils in Mengen von 10 bis 20 Gewichtsteilen enthält für den Fall, daß sie weniger als 15 Gew.teile an Komponente d) oder weniger als 10 Gew.teile an Komponente e) enthält.

**9.** Dispersion nach einem oder mehreren der Patentansprüche 1 bis 8, dadurch gekennzeichnet, daß Komponente a) das aus 2 Mol Guanidin und 1 Mol Orthophosphorsäure gebildete Salz ist.

**10.** Dispersion nach einem oder mehreren der Patentansprüche 1 bis 9, dadurch gekennzeichnet, daß Komponente b) ein Salz der Bruttoformel $(NH_4PO_3)_n$ ist, wobei n einen Durchschnittswert von 500 bis 1000, vorzugsweise 600 bis 800 aufweist.

**11.** Dispersion nach einem oder mehreren der Patentansprüche 1 bis 10, dadurch gekennzeichnet, daß Komponente d) ein Copolymeres auf Basis von Vinylchlorid und Ethylen mit einem Chlorgehalt von 10 bis 25 Gew.% ist.

**12.** Dispersion nach einem oder mehreren der Patentansprüche 1 bis 10, dadurch gekennzeichnet, daß Komponente d) ein Chlorparaffin mit durchschnittlich 18 bis 20 C-Atomen und einem Chlorgehalt von 45 bis 55 Gew.% ist.

**13.** Dispersion nach einem oder mehreren der Patentansprüche 1 bis 12, dadurch gekennzeichnet, daß sie zusätzlich Aluminiumhydroxid und/oder Magnesiumhydroxid enthält oder Salze, welche durch teilweise oder vollständige Neutralisation von Aluminiumhydroxid oder Magnesiumhydroxid mit einer Phosphorsäure entstehen.

**14.** Verwendung einer Dispersion gemäß einem oder mehreren der Patentansprüche 1 bis 13 zur Behandlung von Fasermaterialien.

**15.** Verwendung nach Patentanspruch 14, dadurch gekennzeichnet, daß das Fasermaterial ein Flächengebilde ist, das aus Cellulosefasern oder aus einem Gemisch aus Cellulose- und Polyesterfasern besteht.

Europäisches Patentamt

# EUROPÄISCHER RECHERCHENBERICHT

Nummer der Anmeldung

EP 91 12 2064

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| P,A | EP-A-0 449 159 (ALBRIGHT & WILSON LTD)<br>* Seite 4, Zeile 54 - Seite 5, Zeile 43; Ansprüche * | 1-3,6, 10-12, 14,15 | D06M11/72 |
| A | GB-A-1 504 507 (ALBRIGHT & WILSON LTD)<br>* Seite 1, Zeile 35 - Zeile 41 *<br>* Seite 3, Zeile 6 - Zeile 13 *<br>* Seite 3, Zeile 24 - Zeile 35; Ansprüche * | 1,2,10, 14,15 | |
| D,A | GB-A-2 202 243 (KAZ BROZDOWSKI)<br>* das ganze Dokument * | 1,2,6,7, 10,14,15 | |
| D,A | WPIL, FILE SUPPLIER, DERWENT PUBLICATIONS LTD.; LONDON, GB;<br>AN=88-209249 & JP-A-1 020 267 (KANAGAWA-KEN) 14-04-1989<br>* das ganze Dokument * | 1,2,9, 14,15 | |
| | | | **RECHERCHIERTE SACHGEBIETE (Int. Cl.5 )** |
| | | | D06M |

Der vorliegende Recherchenbericht wurde für alle Patentansprüche erstellt

| Recherchenort | Abschlußdatum der Recherche | Prüfer |
|---|---|---|
| DEN HAAG | 27 APRIL 1992 | BLAS V. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)